# EUROPÄISCHE PATENTSCHRIFT

(11) **EP 2 117 110 B1**
(45) Veröffentlichungstag und Bekanntmachung des Hinweises auf die Patenterteilung: **19.11.2014**
(21) Anmeldenummer: 09004631.9
(22) Anmeldetag: 31.03.2009
(51) Int. Cl.: H02P 9/08, H02P 9/42, H02P 25/22, H02P 27/16, H02M 5/27

(54) **System zur Erzeugung von elektrischer Energie**
System for generating electrical energy
Système pour générer de l'énergie électrique

(30) Priorität: 10.05.2008 DE 102008023211
(43) Veröffentlichungstag der Anmeldung: 11.11.2009
(73) Patentinhaber: GE Energy Power Conversion Technology Limited, Rugby Warwickshire CV21 1BU (GB)
(72) Erfinder: Möhlenkamp, Georg, Dr., 14979 Großbeeren (DE); Bach, Wolfgang, 14979 Großbeeren (DE); Hussels, Peter, Prof. Dr.-Ing., 12203 Berlin (DE)
(74) Vertreter: Serjeants LLP

(56) Entgegenhaltungen:
- WO-A1-2006/103155
- WO-A1-2006/103159

## Beschreibung

Die Erfindung betrifft ein System zur Erzeugung von elektrischer Energie.

Ein derartiges System ist beispielsweise aus der US 5,694,026 bekannt. Dort ist eine Turbine mechanisch direkt mit einem Generator gekoppelt, der seinerseits über einen Umrichter und einen Transformator mit einem elektrischen Energieversorgungsnetz verbunden ist. Zwischen der Turbine und dem Generator ist kein mechanisches Getriebe vorhanden. Im generatorischen Betrieb wird die Turbine mit Brennstoff versorgt, so dass der Generator von der Turbine angetrieben wird und elektrische Energie erzeugt. Diese Energie wird über den Umrichter und den Transformator in das Energieversorgungsnetz eingespeist.

Zum Starten der Turbine aus dem Stillstand wird der Generator motorisch betrieben. Zu diesem Zweck wird elektrische Energie aus dem Energieversorgungsnetz über den Transformator und den Umrichter dem Generator zugeführt, so dass dieser in eine Drehbewegung versetzt wird. Auf diese Weise wird die Turbine auf eine erwünschte Drehzahl beschleunigt.

Weiterer Stand der Technik ist aus der WO 2006/103 155 und der WO 2006/103 159 bekannt.

Aufgabe der Erfindung ist es, das bekannte System zur Erzeugung elektrischer Energie zu verbessern.

Die Erfindung löst diese Aufgabe durch ein System zur Erzeugung von elektrischer Energie nach dem Anspruch 1.

Auf diese Weise liegt an der Gleichstromdrossel eine Spannung an, die der Differenz zwischen den Ausgangsspannungen des Umrichters und der Spannung an der Last, also insbesondere der Netzspannung entspricht. Diese Spannung wird von der Gleichstromdrossel geglättet. Weiterhin wird der über die Gleichstromdrossel fließende Strom begrenzt.

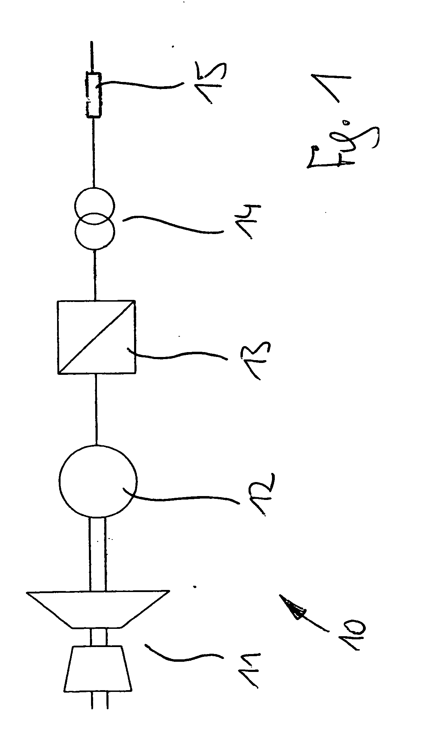

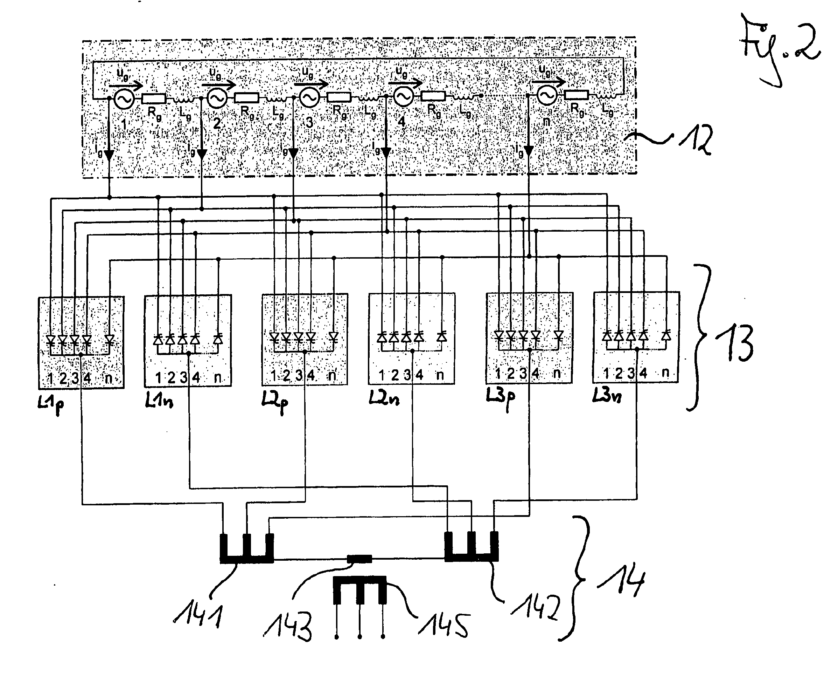

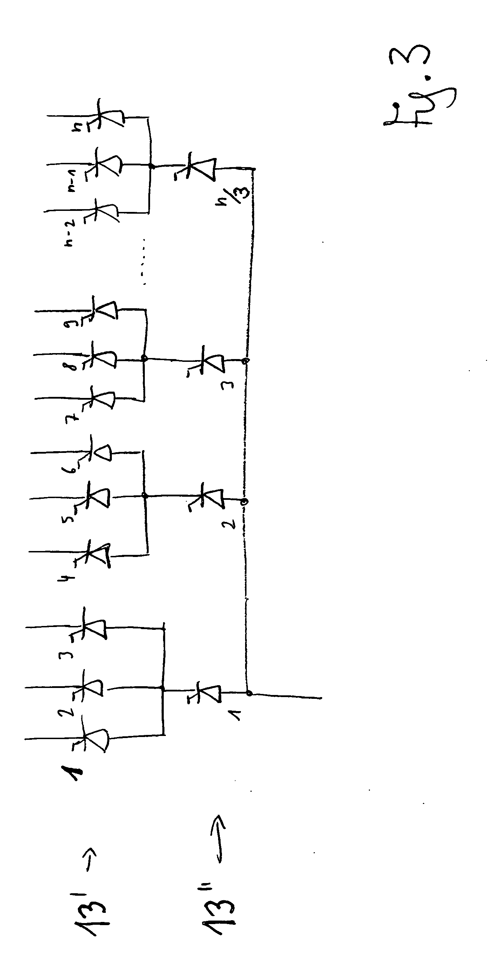

Figur 1 zeigt ein schematisches Blockschaltbild eines Ausführungsbeispiels eines erfindungsgemäßen Systems zur Erzeugung von elektrischer Energie, Figur 2 zeigt ein elektrisches Schaltbild eines Ausführungsbeispiels einer Zusammenschaltung eines Generators, eines Umrichters und eines Transformators zur Verwendung in dem System der Figur 1, und Figur 3 zeigt ein elektrisches Schaltbild eines alternativen Ausführungsbeispiels für den Umrichter der Figur 2.

Das in der Figur 1 gezeigte System 10 zur Erzeugung elektrischer Energie weist eine Turbine 11 auf, die mechanisch mit einem elektrischen Generator 12 direkt gekoppelt ist. Ein zwischengeschaltetes Getriebe oder dergleichen ist nicht vorhanden. Der Generator 12 ist mit einem elektrischen Umrichter 13 verbunden, an den ein mehrphasiger elektrischer Transformator 14 angeschlossen ist. Der Transformator 14 ist weiterhin mit einer elektrischen Last 15, beispielsweise mit einem elektrischen Energieversorgungsnetz verbunden.

Im Betrieb wird die Turbine 11 beispielsweise mit Hilfe von Brennstoffen in Rotation versetzt. Über die direkte mechanische Kopplung wird auch der Generator 12 in eine Drehbewegung versetzt und erzeugt damit in einem generatorischen Betrieb eine Ausgangsspannung mit einer drehzahlabhängigen Frequenz. Mit Hilfe des Umrichters 13 wird diese veränderliche Frequenz der Ausgangsspannung in eine im wesentlichen feste Frequenz umgewandelt, die beispielsweise der Frequenz des Energieversorgungsnetzes entspricht. Danach wird die Ausgangsspannung noch mittels des Transformators 14 auf eine vorgegebene Spannung beispielsweise des Energieversorgungsnetzes angehoben. Insgesamt wird auf diese Weise von dem erläuterten System 10 elektrische Energie erzeugt und beispielsweise in das Energieversorgungsnetz eingespeist.

In der Figur 2 sind der Generator 12, der Umrichter 13 und der Transformator 14 sowie deren elektrische Zusammenschaltung im Detail dargestellt.

Bei dem Generator 12 handelt es sich um einen Synchrongenerator mit einer Gesamtanzahl n von Wicklungen. Insbesondere handelt es sich um einen Synchrongenerator mit einer polygonalen Ausbildung der Wicklungen. Wie aus der Figur 2 hervorgeht, weist jede der n Wicklungen einen Leitungswiderstand Rg und eine Wicklungsinduktivität Lg auf. Diese Leitungswiderstände Rg und Wicklungsinduktivitäten Lg sind von "1" bis "n" durchnummeriert. Im generatorischen Betrieb des Generators 12 wird in jeder der n Wicklungen eine Spannung Ug induziert, die zu einem Strom ig zu dem Umrichter 13 führt.

Bei dem Umrichter 13 handelt es sich um einen Matrixumrichter, insbesondere um einen dreiphasigen Direktumrichter. Jede der n Wicklungen des Generators 12 ist mit drei Thyristoren verbunden, die in einer positiven Stromrichtung geschaltet sind, sowie mit drei Thyristoren, die in einer negativen Stromrichtung geschaltet sind. Zusammengehörige Thyristoren, die gemeinsam den Strom einer Phase des Energieversorgungsnetzes tragen, sind in der Figur 2 in jeweils einem Block L1p, L1n, L2p, L2n, L3p, L3n dargestellt, wobei die Zahlen sich auf die jeweilige Phase beziehen und die Buchstaben die Bedeutung "p = positive Stromrichtung" und "n = negative Stromrichtung" haben. Die Thyristoren in den Blöcken L1p, L2p, L3p und den Blöcken L1n, L2n, L3n sind gegensinnig geschaltet. Innerhalb der gezeigten Blöcke sind die Thyristoren jeweils von "1" bis "n" durchnummeriert. Auf ihrer dem Transformator 14 zugewandten Seite sind die Thyristoren eines Blocks auf jeweils eine Leitung zusammengeschaltet.

Bei dem Transformator 14 handelt es sich insbesondere um einen dreiphasigen Blocktransformator. Auf seiner dem Umrichter 13 zugeordneten Sekundärseite weist der Transformator 14 zwei Wicklungsanordnungen 141, 142 auf, die aus jeweils drei Wicklungen bestehen, die eine Sternschaltung bilden. Die Sternpunkte dieser beiden Wicklungsanordnungen 141, 142 sind über eine Gleichstromdrossel 143 miteinander verbunden. Auf seiner Primärseite weist der Transformator 14 eine weitere Wicklungsanordnung 145 auf, die aus drei Wicklungen besteht, die eine Sternschaltung bilden. Alternativ können die Wicklungen der Wicklungsanordnung 145 in nichtdargestellter Weise auch eine Dreiecksschaltung bilden.

Die von den Blöcken L1p, L2p, L3p kommenden drei Leitungen sind an die drei Wicklungen der ersten sekundärseitigen Wicklungsanordnung 141 angeschlossen und die von den Blöcken L1n, L2n, L3n kommenden drei Leitungen sind an die drei Wicklungen der zweiten sekundärseitigen Wicklungsanordnung 142 angeschlossen. An die drei Wicklungen der primärseitigen Wicklungsanordnung 145 ist die Last 15, also insbesondere das elektrische Energieversorgungsnetz mit einer Netzspannung angeschlossen.

Im generatorischen Betrieb des Generators 12 wird die Turbine 11, wie erläutert wurde, beispielsweise mit Hilfe von Brennstoffen in Rotation versetzt. Die von dem Generator 12 erzeugte elektrische Energie wird über den Umrichter 13 und den Transformator 14 der Last 15, insbesondere dem elektrischen Energieversorgungsnetz zugeführt.

Der Umrichter 13 wird im generatorischen Betrieb in Abhängigkeit vom Generator 12 kommutiert. Die von dem Umrichter 13 erzeugten Ausgangsströme bzw. Ausgangsspannungen werden mit Hilfe von Stromreglern auf einen erwünschten sinusförmigen Verlauf geregelt. Alle positiven Ströme des Umrichters 13 fließen in die Wicklungsanordnung 141 des Transformators 14 und alle negativen Ströme in die Wicklungsanordnung 142.

Die Gleichstromdrossel 143 wird auf diese Weise von einem sechspulsigen Gleichstrom beaufschlagt. Die Spannung an der Gleichstromdrossel 143, also die Spannung zwischen den Sternpunkten der beiden Wicklungsanordnungen 141, 142, ergibt sich aus den integrierten Spannungsdifferenzen zwischen den Ausgangsspannungen des Umrichters 13 und der Spannung an der Last, also insbesondere der Netzspannung des elektrischen Energieversorgungsnetzes. Damit glättet die Gleichstromdrossel 143 die Ausgangsströme des Umrichters 13. Insbesondere werden von der Gleichstromdrossel 143 die Harmonischen der Ausgangsströme des Umrichters 13 begrenzt.

Ist als Turbine 11 beispielsweise eine Gasturbine oder eine technisch ähnliche Turbine vorgesehen, so muss diese Turbine 11 zum Starten des gesamten Systems 10 aus dem Stillstand auf eine Betriebsdrehzahl beschleunigt werden. Bei einer Gasturbine ist es dabei erforderlich, dass die Turbine 11 zuerst von außen, also ohne eigenen Antrieb, auf beispielsweise etwa 70% bis etwa 90 % ihrer Betriebsdrehzahl beschleunigt wird. Erst danach kann sich die Turbine 11 selbst durch eine Brennstoffeinspeisung, also durch eigenen Antrieb, auf die volle Betriebsdrehzahl weiter beschleunigen.

Für denjenigen Zeitbereich der Beschleunigung, bei dem die Turbine 11 von außen angetrieben werden muss, wird der Generator 12 des erläuterten Systems 10 als Motor betrieben. Der Generator 12 wird also über den Transformator 14 und den Umrichter 13 mit elektrischer Energie versorgt und dadurch in eine Drehbewegung versetzt. Die Energie wird dabei aus der Last 15, insbesondere aus dem elektrischen Energieversorgungsnetz bezogen. Aufgrund der mechanischen Kopplung wird auch die Turbine 11 in eine Drehbewegung versetzt und wird somit beschleunigt, ohne dass hierzu ein eigener Antrieb der Turbine 11 erforderlich ist. Diese Vorgehensweise wird bei niederen Drehzahlen der Turbine 11 und insbesondere aus dem Stillstand derselben angewendet.

Die Thyristoren des Umrichters 13 können bei diesem Startvorgang der Turbine 11 in Gruppen zusammengefasst und betrieben werden. Die Kommutierung dieser Gruppen kann dann ausgehend vom Stillstand der Turbine 11 in Abhängigkeit von der Spannung der Last 15, also insbesondere der Netzspannung, und bei höheren Drehzahlen der Turbine 11 in Abhängigkeit von der Spannung am Generator 12 erfolgen. Weiterhin kann eine Stromregelung vorgesehen sein, bei der insbesondere der über die Gleichstromdrossel 143 fließende Strom geregelt wird.

Erreicht die Turbine 11 auf diese Weise etwa 70% bis etwa 90 % ihrer Betriebsdrehzahl, so werden die Thyristoren abgeschaltet und der motorische Betrieb des Generators 12 wird beendet. Es wird daraufhin Brennstoff der Turbine 11 zugeführt, so dass die Turbine aus eigenem Antrieb vollends auf 100 % ihrer Betriebsdrehzahl beschleunigen kann. Sobald die Turbine 11 ihre Betriebsdrehzahl erreicht hat, erfolgt der bereits erläuterte generatorische Betrieb des Generators 12 und es wird elektrische Energie an die Last 15, also insbesondere an das elektrische Energieversorgungsnetz abgegeben.

In der Figur 3 ist ein alternatives Ausführungsbeispiel des Umrichters 13 der Figur 2 dargestellt, bei der der Umrichter 13 aus zwei Stufen 13' und 13'' zusammengesetzt ist.

In der ersten Stufe 13' sind von "1" bis "n" durchnummerierte Thyristoren vorhanden, die jeweils mit einer der Wicklungen des Generators 12 verbunden sind. Im vorliegenden Ausführungsbeispiel sind in der ersten Stufe 13' immer drei Thyristoren zu einer Gruppe zusammengefasst. Allgemein können immer p Thyristoren zu einer Gruppe zusammengefasst sein.

Jede dieser Gruppen ist mit einem weiteren Thyristor der zweiten Stufe 13'' verbunden, die von "1" bis "n/3" bzw. allgemein von "1" bis "n/p" durchnummeriert sind. Diese Thyristoren sind dann zum Anschluss an eine der Wicklungen der sekundärseitigen Wicklungsanordnungen 141, 142 des Transformators 14 zusammengefasst.

Mit Hilfe der Ausgestaltung des Umrichters 13 gemäß der Figur 3 kann insbesondere bei höheren Spannungen die Anzahl der in Reihenschaltungen erforderlichen Thyristoren reduziert werden.

## Patentansprüche

1. System (10) zur Erzeugung von elektrischer Energie, mit einer Turbine (11), die mit einem Generator (12), welcher n Wicklungen aufweist, mechanisch gekoppelt ist, der seinerseits elektrisch über einen Umrichter (13) und einen dreiphasigen Transformator (14) mit einer Last (15), insbesondere mit einem elektrischen Energieversorgungsnetz, gekoppelt ist, wobei der Umrichter (13) mit Thyristoren ausgestattet ist, wobei jede der n Wicklungen des Generators (12) mit drei Thyristoren verbunden ist, die in einer positiven Stromrichtung geschaltet sind, und mit drei Thyristoren verbunden ist, die in einer negativen Stromrichtung geschaltet sind, **dadurch gekennzeichnet, dass** die Thyristoren des Umrichters (13) in sechs Blöcken (L1p ... L3n) angeordnet sind, wobei drei Blöcke (L1p, L2p, L3p) jeweils n Thyristoren in der positiven Stromrichtung haben, deren Kathoden mit einer entsprechenden Leitung verbunden sind und drei Blöcke (L1n, L2n, L3n) jeweils n Thyristoren in der negativen Stromrichtung haben, deren Anoden mit einer entsprechenden Leitung verbunden sind, wobei der Transformator (14) auf seiner dem Umrichter (13) zugeordneten Seite zwei Wicklungsanordnungen (141, 142) in Sternschaltung aufweist, wobei jede der Wicklungsanordnungen (141, 142) drei Wicklungen aufweist, wobei jede Wicklung der ersten Wicklungsanordnung (141) entsprechend mit der Leitung eines Umrichterblocks (L1p, L2p, L3p) mit n Thyristoren in der positiven Stromrichtung und jede Wicklung der zweiten Wicklungsanordnung (142) entsprechend mit der Leitung eines Umrichterblocks (L1n, L2n, L3n) mit n Thyristoren in der negativen Stromrichtung verbunden sind, und wobei die Sternpunkte der beiden Wicklungsanordnungen (141, 142) über eine Gleichstromdrossel (143) miteinander verbunden sind.

2. System (10) nach Anspruch 1, wobei der Generator (12) eine Anzahl (n) von Wicklungen aufweist, und wobei der Umrichter (13) für jede Phase des Transformators (14) eine Anzahl von gegensinnig geschalteten Schalteinrichtungen aufweist, die der Anzahl (n) der Wicklungen des Generators (12) entspricht.

3. System (10) nach einem der vorstehenden Ansprüche, wobei die Kommutierung der Schalteinrichtungen des Umrichters (13) in einem generatorischen Betrieb des Generators (12) in Abhängigkeit von dem Generator (13) erfolgt.

4. System (10) nach einem der vorstehenden Ansprüche, wobei die Last (15) ein elektrisches Energieversorgungsnetz ist, wobei zum Starten der Turbine (11) ein motorischer Betrieb des Generators (12) vorgesehen ist.

5. System (10) nach Anspruch 4, wobei die Kommutierung der Schalteinrichtungen des Umrichters (13) in dem motorischen Betrieb des Generators (13) bei niederen Drehzahlen der Turbine (11) in Abhängigkeit von dem elektrischen Energieversorgungsnetz erfolgt.

6. System (10) nach einem der vorstehenden Ansprüche, wobei die Turbine (11) direkt mit dem Generator (12) gekoppelt ist.

7. System (10) nach einem der vorstehenden Ansprüche, wobei der Generator (12) als Synchrongenerator ausgebildet ist, insbesondere als Synchrongenerator mit einer polygonalen Ausbildung der Wicklungen.

8. System (10) nach einem der Ansprüche 1 bis 7, wobei der Umrichter (13) als Matrixumrichter ausgebildet ist, insbesondere als Direktumrichter.

9. System (10) nach einem der Ansprüche 1 bis 7, wobei der Umrichter (13) insbesondere bei höheren Spannungen zweistufig ausgebildet ist.

10. System (10) nach einem der vorstehenden Ansprüche, wobei als Turbine (11) eine Gasturbine vorgesehen ist.

## Claims

1. System (10) for generating electrical power, comprising a turbine (11) mechanically connected to a generator (12) which has n windings and which is in turn electrically connected via a converter (13) and a three phase transformer (14) to a load (15), in particular an electrical power supply grid, wherein the converter (13) is provided with thyristors, wherein each of the n windings of the generator (12) are connected to three thyristors that are switched in a positive current direction and to three thyristors that are switched in a negative current direction, **characterized in that** the thyristors of the converter (13) are arranged in six blocks (L1p...L3n), wherein three blocks (L1p, L2p, L3p) each have n thyristors in the positive current direction, the cathodes of which are connected to a corresponding line, and three blocks (L1n, L2n, L3n) each have n thyristors in the negative current direction, the anodes of which are connected to a corresponding line, wherein the transformer (14) comprises two winding arrangments (141, 142) in a star connection on its side facing the converter (13), wherein each of the winding arrangments (141, 142) comprises three windings, wherein each winding of the first winding arrangement (141) is correspondingly connected to the line of the converter block (L1p, L2p, L3p) having n thyristors in the positive current direction, and each winding of the second winding arrangement (142) is correspondingly connected to the line of the converter block (L1n, L2n, L3n) having n thyristors in the negative current direction, and wherein the star points of the two winding arrangments (141, 142) are connected to each other via a direct current choke (143).

2. The system (10) according to claim 1, wherein the generator (12) comprises a number (n) of windings and wherein the converter (13) comprises, for each phase of the transformer (14), a number of counter-connected switching devices, which corresponds to the number (n) of the windings of the generator (12).

3. The system (10) according to anyone of the preceding claims, wherein commutation of the switching devices of the converter (13) occurs during a generator operation of the generator (12) in dependence on the generator (13).

4. The system (10) according to anyone of the preceding claims, wherein the load (15) is an electrical power supply grid, wherein a motor operation of the generator (12) is provided for the start-up of the turbine (11).

5. The system (10) according to claim 4, wherein commutation of the switching devices of the converter (13) occurs in the motor operation of the generator (13) at low rotational speeds of the turbine (11) in dependence on the electrical power supply grid.

6. The system (10) according to anyone of the preceding claims, wherein the turbine (11) is directly coupled to the generator (12).

7. The system (10) according to anyone of the preceding claims, wherein the generator (12) is designed as synchronous generator, in particular as a synchronous generator having a polygonal configuration of the windings.

8. The system (10) according to anyone of the claims 1 through 7, wherein the converter (13) is designed as matrix converter, in particular as direct converter.

9. The system (10) according to anyone of the claims 1 through 7, wherein the converter (13) has a two-stage configuration in particular for higher voltages.

10. The system (10) according to anyone of the preceding claims, wherein the turbine (11) is provided by a gas turbine.

## Revendications

1. Système (10) destiné à la production d'énergie électrique, comprenant une turbine (11) qui est couplée mécaniquement à une génératrice (12) comportant n enroulements (15) et couplée à son tour électriquement à une charge (15), en particulier un réseau d'alimentation en énergie électrique, par l'intermédiaire d'un convertisseur (13) et d'un transformateur (14) triphasé, le convertisseur (13) étant équipé de thyristors, chacun des n enroulements de la génératrice (12) étant relié à trois thyristors, qui sont montés dans un sens de courant positif, et étant relié à trois thyristors qui sont montés dans un sens de courant négatif, **caractérisé en ce que** les thyristors du convertisseur (13) sont disposés en six blocs (L1p ... L3n), trois blocs (L1p, L2p, L3p) comportant respectivement n thyristors dans le sens de courant positif, dont les cathodes sont reliées à une ligne correspondante, et trois blocs (L1n, L2n, L3n) comportant respectivement n thyristors dans le sens de courant négatif, dont les anodes sont reliées à une ligne correspondante, le transformateur (14), sur son côté associé au convertisseur (13), présentant deux ensembles d'enroulements (141, 142) montés en étoile, chacun des ensembles d'enroulements (141, 142) présentant trois enroulements, chaque enroulement du premier ensemble d'enroulements (141) étant relié de façon correspondante à la ligne d'un bloc de convertisseur (L1p, L2p, L3p) à n thyristors dans le sens de courant positif, et chaque enroulement du deuxième ensemble d'enroulements (142) étant relié de façon correspondante à la ligne d'un bloc de convertisseur (L1n, L2n, L3n) à n thyristors dans le sens de courant négatif, et les points neutres des deux ensembles d'enroulements (141, 142) étant reliés entre eux par l'intermédiaire d'une inductance à courant continu (143).

2. Système (10) selon la revendication 1, dans lequel la génératrice (12) présente un nombre (n) d'enroulements, et dans lequel le convertisseur (13) présente pour chaque phase du transformateur (14) un nombre de dispositifs de couplage montés dans des sens opposés, qui correspond au nombre (n) d'enroulements de la génératrice (12).

3. Système (10) selon l'une des revendications précédentes, dans lequel la commutation des dispositifs de couplage du convertisseur (13), en mode générateur de la génératrice (12), s'effectue en fonction de la génératrice (13).

4. Système (10) selon l'une des revendications précédentes, dans lequel la charge (15) est un réseau d'alimentation en énergie électrique, un fonctionnement en mode moteur de la génératrice (12) étant prévu pour le démarrage de la turbine (11).

5. Système (10) selon la revendication 4, dans lequel la commutation des dispositifs de couplage du convertisseur (13), lors du fonctionnement en mode moteur de la génératrice (13) en présence de vitesses de rotation faibles de la turbine (11), s'effectue en fonction du réseau d'alimentation en énergie électrique.

6. Système (10) selon l'une des revendications précédentes, dans lequel la turbine (11) est couplée directement à la génératrice (12).

7. Système (10) selon l'une des revendications précédentes, dans lequel la génératrice (12) est réalisée sous forme de génératrice synchrone, en particulier sous forme de génératrice synchrone à configuration polygonale des enroulements.

8. Système (10) selon l'une des revendications 1 à 7, dans lequel le convertisseur (13) est réalisé sous forme de convertisseur matriciel, en particulier sous forme de convertisseur direct.

9. Système (10) selon l'une des revendications 1 à 7, dans lequel le convertisseur (13) est réalisé avec deux étages, notamment pour des tensions relativement élevées.

10. Système (10) selon l'une des revendications précédentes, dans lequel une turbine à gaz est prévue en tant que turbine (11).
